# EUROPEAN PATENT SPECIFICATION

(11) **EP 1 899 988 B1**
(45) Date of publication and mention of the grant of the patent: **23.01.2013**
(21) Application number: 06770960.0
(22) Date of filing: 23.05.2006
(51) Int. Cl.: H01B 7/00, H01R 43/00, H01B 13/26, B05D 5/12

(54) **ELECTRICAL CABLE HAVING A SURFACE WITH REDUCED COEFFICIENT OF FRICTION**
ELEKTRISCHES KABEL MIT EINER OBERFLÄCHE MIT VERRINGERTEM REIBUNGSKOEFFIZIENTEN
CABLE ELECTRIQUE POSSEDANT UNE SURFACE AVEC UN COEFFICIENT DE FROTTEMENT REDUIT

(30) Priority: 24.05.2005 US 135986
(43) Date of publication of application: 19.03.2008
(73) Proprietor: SOUTHWIRE COMPANY, Carrollton Georgia 30119 (US)
(72) Inventor: KUMMER, Randy D., Villa Rica, Georgia 30180 (US); REECE, David, Carrollton, Georgia 30117 (US); DIXON, Mark D., Carrollton, Georgia 30117 (US); CARLSON, John R., Newnan, Georgia 30264 (US); LAM, Hai, Douglasville, Georgia 30135 (US); SASSE, Philip, Douglasville, Georgia 30153 (US)
(74) Representative: Fletcher, Matthew James Edwin
(86) International application number: PCT/US2006/019923
(87) International publication number: WO 2006/127711

(56) References cited:
- JP-A- 1 110 013
- US-A- 3 852 875
- US-A- 4 356 139
- US-A- 5 036 121
- US-A- 5 753 861
- US-A- 5 912 436
- US-A- 6 159 617
- US-A1- 2002 043 391

## Description

### TECHNICAL FIELD

The present invention relates to the use of an electrical cable and its installation through wall or ceiling cavities, conduits or ducts, and the reduction of the cells coefficient of friction.

### BACKGROUND ART

Electrical cables which include at least one conductor core and at least one coating are well known.

Such cables present the disadvantage that their exterior surface has a high coefficient of friction, so that they are awkward to fit in internal sections of walls and ceilings or conduits, since when they come into contact with the surfaces they become stuck or difficult to pull, etc.

In order to overcome said difficulty, alternative materials such as vaselines and the like have been used to coat the exterior surface of the cable, thereby reducing the coefficient of friction.

In a complementary manner, guides of small diameter are sometimes used, one end of which is inserted through the cavity through which the cable has to pass and the other is attached to the end of the cable which must be inserted into the cavity. Thus, once the guide has emerged at the desired place it is pulled until the end of the cable appears again after having passed through the entire section.

In numerous fields of application, and in particular telecommunications, electric or fiber optic cables are inserted into ducts. There is therefore a need to minimize the coefficient of friction between cables and the inside walls of ducts.

In one solution, the core of the cable passes via a first extruder which applies a conventional sheath thereto i.e., a jacket and/or insulation, often made of polyethylene. The sheathed core then passes through a second extruder which applies a lubricant layer thereto, such as an alloy of silicone resin and polyethylene. The cable lubricated in that way then passes in conventional manner through a cooling vessel.

A second solution provides for an extruder to cover the core of a cable with a sheath. At the outlet from that extruder there is disposed a coating chamber for applying granules of material to the still-hot sheath, which granules are designed to become detached when the cable is inserted in a duct. Finally, the coated cable passes through a cooling vessel.

In both of these two prior solutions, it is necessary to interpose additional equipment between the extruder and the cooling vessel. That gives rise to a major alteration of the manufacturing line.

In addition, the equipment for depositing the lubricant must be very close to the sheath extrusion head since otherwise it is not possible to control the thickness of the sheath properly. In any event, the additional equipment occupies non-negligible space and such an arrangement is not favorable for control over the dimensions of the sheath.

Whatever the prior art method used, the manufacture and/or installation of said cables involves a considerable loss of time and an economic cost, since alternative materials are required.

### OBJECTS AND SUMMARY OF THE INVENTION

The present invention thus seeks to provide a use of a cable having a surface with reduced coefficient of friction.

A lubricant is incorporated in the sheath of a cable, the sheath being made by means of an extruder and optionally followed by a cooling vessel.

In one embodiment of the present invention, the lubricant material is mixed with the sheath material prior to either material being heated.

In another embodiment of the invention, the lubricant material is heated and mixed with the sheath material prior to the sheath material being heated.

In a further embodiment of the invention, the lubricant material is mixed with the sheath material after both materials have been heated.

In yet another embodiment of the invention, the non-heated lubricant material is mixed with heated sheath material.

As used herein the term sheath means a jacket and/or insulation applied to the core of a cable.

### DISCLOSURE OF THE INVENTION

With the use of the invention said disadvantages can be solved, while providing other advantages which will be described below.

The electrical cable of the invention is characterized in that it includes a lubricating material mixed with the sheath material and this mixture is applied to the core of the cable.

A cable with low coefficient of friction is achieved thereby, so that subsequent installation of the same is considerably simplified, since it slides over the surfaces with which it comes into contact.

The step of mixing the lubricating material and the sheath material may be carried out with the lubricating material heated or not and the sheath material heated or not.

The sheath material normally is introduced in pellet form to an extruder which heats and directs the sheath material onto the cable or conductor core. The present invention includes the embodiment of incorporating the lubricating material into the sheath pellets during the formation of the sheath pellets and introducing this mixture of sheath pellets and lubricant material into an extruder, the embodiment of mixing the lubricant material with the sheath pellets and the embodiment of introducing this mixture into the extruder, and introducing the sheath pellets into the extruder and subsequently introducing the lubricating material into the extruder prior to contacting the cable core.

Advantageously, the lubricant material is selected from the group consisting essentially of fatty amides, hydrocarbon oils, and mixtures thereof. The lubricant material may be incorporated at any point in the manufacturing process before the formation of the sheath, and depending upon the material, may be heated prior to mixing with the sheath material.

In instances where the sheath material has a high melting or softening temperature, or for other reasons such as processibility, efficiency of the process, etc. the lubricant material may be added to the sheath material as the sheath material is being formed. If the final cable construction is such that there are two or more different sheath materials applied to the cable core, the lubricant material need only be incorporated into the outermost sheath material.

Advantageously, the lubricating materials include fatty amides, fatty acids, fatty esters and metallic fatty acids and more advantageously include fatty amides, fatty acids, fatty esters, and metallic fatty acids having from 10 to 28 carbon atoms preferably from 10 to 22 carbon atoms and include, but are not limited to erucamide, oleamide, oleyl palmitamide, stearyl stearamide, stearamide, behenamide, ethylene bisstearamide, ethylene bisoleamide, stearyl erucamide, erucyl stearamide, capric acid, lauric acid, myristic acid, palmitic acid, palmitoleic acid, stearic acid, oleic acid, vaccenic acid, linoleic acid, linolenic acid, eleostearic acid, arachidic acid, arachidonic acid, behenic acid, lignoceric acid, nervonic acid, cerotic acid, montanic acid, caprate, laurate, myristate, palmitate, palmitoleate, stearate, oleate, vaccinate, linoleate, linolenate, eleostearate, arachidate, arachidonate, behenate, lignocerate, nervonate, cerotate, montanate, pentaerythritol monopalmitate, pentaerythritol monostearate, pentaerythritol dipalmitate, pentaerythritol palmitate stearate, pentaerythritol distearate, and the like. Advantageous hydrocarbon oils include, but are not limited to, mineral oil, silicone oil, and the like. Lubricating materials suitable for the present invention further include plasticizers, dibasic esters, silicones, anti-static amines, organic amines, ethanolamides, mono-and diglyceride fatty amines, ethoxylated fatty amines, fatty acids, zinc stearate, stearic acids, palmitic acids, calcium stearate, lead stearate, sulfates such as zinc sulfate, etc., and the like. The above lubricating materials may be used individually or in combination.

The electrical cable is characterized in that it incorporates a lubricating material in the sheath coating, which lubricating material blooms, migrates toward the exterior, or permeates the cable sheath. If desired the sheath material may be somewhat porous, thereby resulting in the lubricating material more readily migrating toward the exterior surface of the sheath.

The sheath of the cable thus contains sufficient lubricating material to provide an exterior surface with reduced coefficient of friction.

The equipment for the manufacturing of electrical cables is characterized in that it may include a device for the incorporation of a lubricating material into the sheath material prior to application to the cable core.

Said equipment may also include a tank to maintain the lubricating material, a section for mixing the lubricating material and sheath material and a section for applying the mixture to the cable core.

Moreover, the equipment may also include a pressure adjusting valve(s), a level indicator(s) of the lubricating material tank and sheath material tanks, and a pressure gauge(s).

### BRIEF DESCRIPTION OF THE DRAWINGS

For a better understanding of the present invention, a drawing is attached in which, schematically and by way of example, an embodiment is shown.

FIG. 1 is a schematic elevation view of equipment for manufacturing electrical cable, according to the method of the present invention.

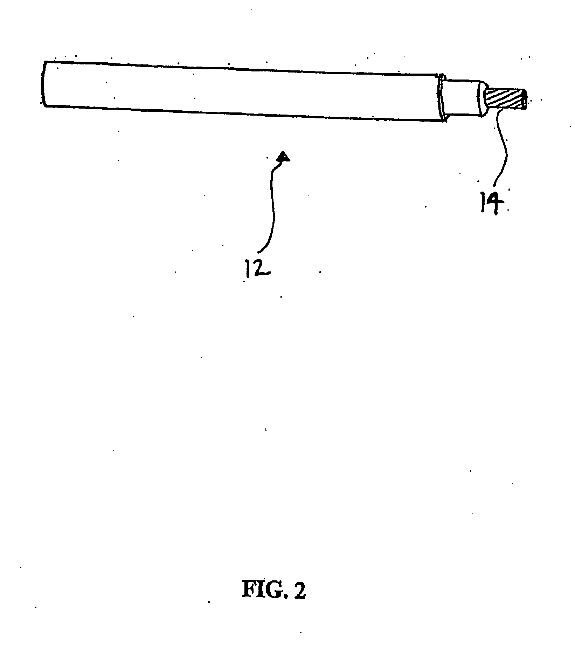

FIG. 2 is a section view of a THHN cable of the present invention.

### BEST MODE FOR CARRYING OUT THE INVENTION

THHN or THWN-2 conductors are 600 volt copper conductors with a thermoplastic insulation/nylon sheath and are heat, moisture, oil, and gasoline resistant. AWG sizes usually range from 14 through 6. THHN conductors are primarily used in conduit and cable trays for services, feeders, and branch circuits in commercial or industrial applications as specified in the National Electrical Code. Type THHN is suitable for use in dry locations at temperatures not to exceed 90°C. Type THWN-2 is suitable for use in wet or dry locations at temperatures not to exceed 90°C or not to exceed 75°C when exposed to oil or coolant. Type MTW is suitable for use in wet locations or when exposed to oil or coolant at temperatures not to exceed 60°C or dry locations at temperatures not to exceed 90°C. Type THHN, THWN-2, and MTW copper conductors are usually annealed (soft) copper, insulated with a tough, heat and moisture resistant polyvinylchloride (PVC), over which a nylon (polyamide) or UL-listed equivalent jacket is applied.

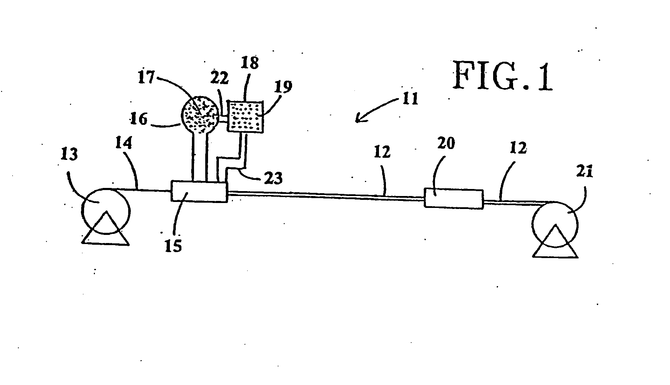

As can be appreciated in FIG. 1, the equipment 11 for manufacturing electrical cable 12 of the present invention includes a reel 13 which supplies conductor wire 14 to an extruding head 15, which in turn includes a tank 16 of second plastic material 17; a tank 15 of lubricating material 19 for mixture with plastic material 17 and for application onto the exterior surface of the conductor wire 14; a cooling box 20 for cooling the exterior surface of the plastic material 17 - lubricating material 19 mixture which is in a state of fusion or semi-fusion on the conductor wire or cable core 14; and a reel 21 for taking up the resulting cable 12. Advantageously the conductor wire is coated with a first plastic material and this in turn is coated with the second plastic material-lubricating material mixture.

As can also be seen in the figures, the tank 18 may include a section 22 through which the lubricating material can pass into tank 16 and be mixed with second plastic material 17 and a section 23 through which lubricating material 19 can be introduced directly into extruding head 15 at a point after second plastic material 17 has been introduced into extruding head 15.

The THHN cable of the present invention has a layer of polyvinylchloride insulation near or adjacent the conductor with an outer layer of polyamide, preferably nylon.

The present inventive method and the novel cable produced thereby includes the step of coating conductor wire or cable 14 with the mixture of second plastic material 17 and lubricating material 19 and optionally cooling the coated cable formed thereby.

Cable 12 is thus obtained with at least one conducting core and an exterior coating, the main characteristic of which is that its coefficient of friction is low, which makes it easier to install since it slips on the surfaces with which it comes into contact.

Another beneficial property gained by the present invention is an increased resistance to "burn-through." "Burn-through," or "pull-by," results from friction generated by pulling one cable over another during installation, causing deterioration and eventual destruction to its own jacket as well as the jacket of the other cable. When using a lubricated cable of this invention the number of six-inch-stroke cycles required to produce burn-through was increased from 100 to 300.

The present inventive cable may also enhance ease in stripping the jacket from the cable end - termed stripability.

A further benefit of the present invention is the reduction of jacket rippling. Jacket rippling results from the friction of the jacket against building materials, causing the jacket material to stretch and bunch. Jacket damage may result. Installation situations, which repeatedly caused jacket rippling in unlubricated cable caused no rippling in lubricated cable jackets.

It has been found experimentally that the use of a lubricating material disclosed herein is suitable for providing a considerable reduction of the coefficient of friction of the cable, which means that it is easier to install without adding any external element to it, which is one of the objectives sought in the present invention.

### EXAMPLE

To understand the affects of the jacket lubricant system on the ease of pull variations of the UL (Underwriters Laboratories, Inc.) joist pull test was utilized.

The joist pull test outlined in UL 719 Section 23 establishes the integrity of the outer PVC jacket of Type NM-B constructions when subjected to pulling through angled holes drilled through wood blocks.

The test apparatus consists of an arrangement of 2"x4" wood blocks having holes drilled at 15° drilled through the broad face. Four of these blocks are then secured into an frame so that the centerlines of the holes are offset 10" to create tension in the specimen through the blocks. A coil of NM-B is placed into a cold-box and is conditioned at -20°C for 24 hours. A section of the cable is fed through corresponding holes in the blocks where the end protruding out of the last block is pulled through at 45° to the horizontal. The cable is then cut off and two other specimens are pulled through from the coil in the cold-box. Specimens that do not exhibit torn or broken jackets and maintain conductor spacing as set fort in the Standard are said to comply.

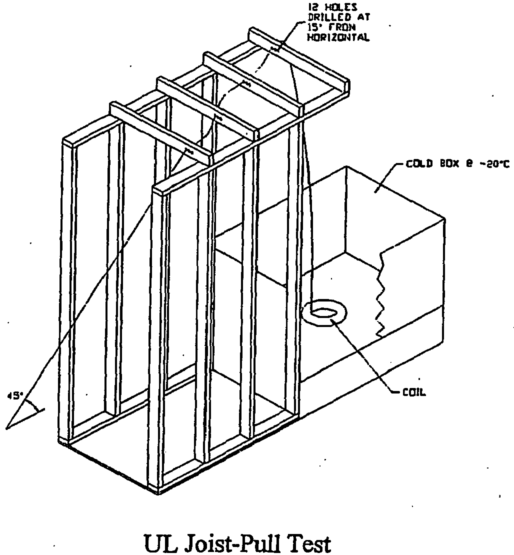

Pulling wire through the wood blocks provides a more direct correlation of the amount of force required to pull NM-B in during installation. Because of this relationship, the joist-pull test is initially the basis for which ease of pulling is measured, but a test for quantifying this "ease" into quantifiable data had to be established.

A variable-speed device was introduced to pull the cable specimen through the blocks. An electro-mechanical scale was installed between the specimen and the pulling device to provide a readout of the amount of force in the specimen. To create back tension a mass of known weight (5-lbs (2.3 kg)) was tied to the end of the specimen.

Data recorded proved that NM-B constructions having surface lubricates reduced pulling forces.

A 12-V constant speed winch having a steel cable and turning sheave was employed; the turning sheave maintains a 45 degree pulling angle and provides a half-speed to slow the rate of the pulling so that more data points could be obtained. Holes were drilled in rafters whereby specimens could be pulled by the winch.

It was found using this method that lubricated specimens yielded approximately a 50% reduction in pulling force when compared to standard, non-lubricated NM-B specimens. The results are shown in Tables 1 and 2 wherein the data was recorded at five second intervals.

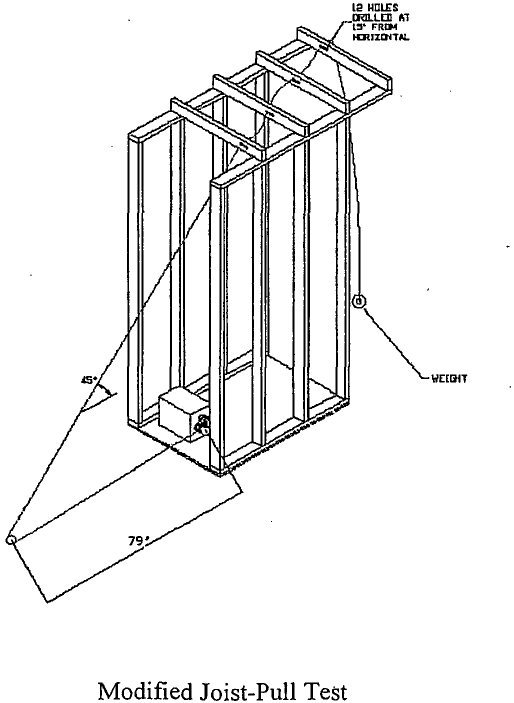

**TABLE 1**

| Test Pt. Descr. | Specimen Description | | | | | | | | |
|---|---|---|---|---|---|---|---|---|---|
| | Manufacturer A1 | Manufacturer A2 | Manufacturer A3 | Manufacturer B1 | Manufacturer B2 | Manufacturer B3 | Control 1 | Control 2 | Present Invention |
| 1 st Point | 26.8 | 48.3 | | 37.8 | 37.4 | | 16.5 | 41.9 | 24 |
| 2nd Point | 34.6 | 51.1 | | 35.2 | 38.1 | | 41.6 | 42 | 20.5 |
| 3rd Point | 33.7 | 46.8 | | 32 | 33 | | 40.2 | 38.7 | 20 |
| 4th Point | 38.6 | 49.8 | | 34.7 | 34.6 | | 41.3 | 29.5 | 17.4 |
| 5th Point | 33.1 | 44.8 | | 34.2 | 32.5 | | 41.3 | 34.3 | 20.2 |
| 6th Point | 28.6 | 44.7 | | 32.2 | 33.2 | | 42.5 | 35.9 | 15.8 |
| 7th Point | 5.5 | 51 | | 32.2 | 33.9 | | 41.1 | 37 | 17.2 |
| 8th Point | 26.8 | 49.2 | | 33.9 | 33 | | 40.9 | 38.4 | 17.3 |
| 9th Point | 21.9 | 52.5 | | 32.6 | 30.6 | | 42.7 | 37.3 | 21.9 |
| Average | 30.51 | 48.69 | | 33.87 | 34.03 | | 41.45 | 37.22 | 19.37 |

| | | | | | | | | | |
|---|---|---|---|---|---|---|---|---|---|
| AAA - Denotes Outlyers Test in Table 1 performed at a constant speed with winch using 1/2 speed pulley Test in Table 2 performed on cable with a 5# weight suspended at building entry | | | | | | | | | |

| Std. Prod. Average | Present Invention |
|---|---|
| 37.6289 | 19.37 |

**TABLE 2**

| Test Pt. Descr. | Specimen Description | | | | | | |
|---|---|---|---|---|---|---|---|
| | Manufacturer A 14-2 | Manufacturer B 14-2 | Control 1 | Control 2 14-2/12-2 | Control 3 14-2/12-2 | Invention A 14-2/12-2 | Invention B 14-2/12-2 |
| 1st Point | 34 | 32.6 | 50 | 47.5 | 40.2 | 21.5 | 12.3 |
| 2nd Point | 35 | 35.7 | 50.6 | 38.3 | 37.5 | 22.9 | 12.8 |
| 3rd Point | 35.5 | 31.2 | 46.7 | 43.2 | 27.5 | 29 | 12.1 |
| 4th Point | 37.7 | 35 | 44.5 | 46 | 36.8 | 22.4 | 14.9 |
| 5th Point | 40.5 | 30.6 | 46.2 | 39.5 | 36 | 23.3 | 11.9 |
| 6th Point | 32.9 | 28.8 | 40.9 | 35.7 | 41.2 | 21.1 | 12.5 |
| 7th Point | 44.2 | 32.4 | 52.8 | 37.5 | 37 | 21.6 | 11.7 |
| 8th Point | 43 | 32.4 | 40.7 | 27.7 | 31.7 | 22.5 | 11.7 |
| 9th Point | 43.4 | 30.5 | 40 | 31.1 | | 19.2 | 11 |
| 10th Point | 40 | | | | | | 11.6 |
| Average | 38.62 | 32.13 | 45.82 | 38.50 | 35.99 | 22.61 | 12.25 |
| | 14-2/12-2 Control Avg. 40.103241 | | 14-2/12-2 Invention A 22.61 | | | 14-2/12-2 Invention B 12.25 | |

**TABLE 3**

| **Pulling Data on THHN Cable** | |
|---|---|
| **Sample** | **Pulling Force, lbs** |
| **Control Cable** | **38.5** (17.5 kg) |
| **Cable + 0.25% additive A** | **18.1** (8.2 kg) |
| **Cable + 0.50% additive A** | **16.0** (7.3 kg) |
| **Cable + 0.85% additive A** | **18.5** (8.4 kg) |
| **Cable + 0.25% additive B** | **13.2** (6.0 kg) |
| **Cable + 0.50% additive B** | **10.3** (4.7 kg) |
| **Cable + 0.85% additive B** | **9.6** (4.4 kg) |
| **Cable + Yellow 77 lube** | **15.3** (7.0 kg) |

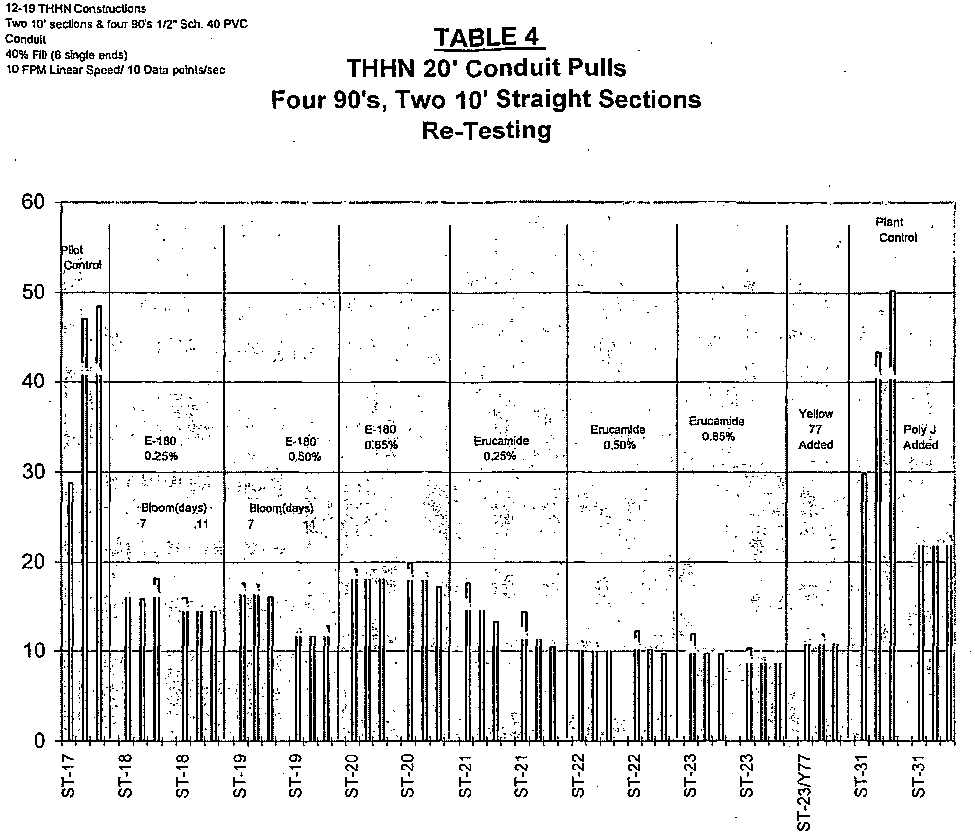

## Claims

1. The use of an electrical cable (12) having a cable core (14) and an external jacket with an exterior surface defining the outermost exterior surface of the cable (12) wherein the external jacket of the cable (12) is formed of extruded plastic material (17) **characterized in that**:
the electrical cable (12) is utilised in installation through wall or ceiling cavities conduits or ducts ;
the cable core (14) is comprised of an electrical conductor with thermoplastic insulation;
the plastic material (17) forming the external jacket is a polyamide material;
the jacket incorporates lubricating material (19) that blooms, migrates toward the exterior surface of or permeates the jacket, the lubricating material being incorporated into the sheath during or prior to the extruding; and
the jacket contains sufficient lubricating material (19) to provide a reduced coefficient of friction of the exterior surface of said external jacket sufficient to reduce the amount of force required to pull the cable (12) through said passageways during its installation.

2. The use as defined by Claim 1, in which the introduction of said lubricating material (19) is into said plastic material (17) and is effected by combining said lubricating material (19) with said plastic material (17) in non- pellet form, thereby to form sufficiently lubricated material pellets, and the so-lubricated material pellets are thereafter used for said extruding.

3. The use as defined in claim 1, in which said introduction is effected by injecting said plastic material (17) in non-lubricated form into an extruding head (15) at a first location and injecting the said selected lubricating material (19) into said extruding head (15) at a second location downstream from said first location, while extruding said jacket through said extruding head.

4. The use as defined in claim 1, in which said introduction is effected by combining said preselected lubricating material (19) with pellets of said plastic material (17), and extruding the jacket with use of the so-lubricated material pellets.

5. The use as defined by any of claims 1 to 4, in which the thermoplastic insulation of the cable core (17) is polyvinylchloride (PVC).

6. The use as defined by any of claims 1 to 5 in which the cable core (14) includes at least one electrical conductor, and the thermoplastic material (17) is extruded directly onto electrical conductor.

7. The use as defined by any of the foregoing claims, in which said electrical cable is a THHN cable.

8. The use as defined by any one of the foregoing claims in which the reduction of the required force for installation is at least approximately 50% of the force required to install non-lubricated cable of the same cable type.

9. The use as defined in any one of the foregoing claims, in which the installation is through the internal section of a wall or ceiling.

10. The use as defined in any one of the foregoing claims in which the installation is through a conduit.

11. The use as defined in any one of the foregoing claims in which the installation is through a duct.

12. The use as defined in any one of the foregoing claims in which said lubricating material (19) is comprised of silicone oil.

## Patentansprüche

1. Verwendung eines elektrischen Kabels (12) mit einem Kabelkern (14) und einem Außenmantel mit einer Außenoberfläche, die die äußerste Außenoberfläche des Kabels (12) definiert, wobei der Außenmantel des Kabels (12) aus einem extrudierten Kunststoffmaterial (17) gebildet ist, **dadurch gekennzeichnet,**
**dass** das elektrische Kabel (12) bei einer Installation durch Wand - oder Deckenhohlräume, Kanäle oder Röhren verwendet wird;
**dass** der Kabelkern (14) aus einem elektrischen Leiter mit thermoplastischer Isolierung besteht;
**dass** das Kunststoffmaterial, welches den Außenmantel bildet, ein Polyamidmaterial ist;
**dass** der Mantel Schmiermaterial (19) eingelagert hat, welches ausblüht, in Richtung der Außenoberfläche des Mantels migriert oder den Mantel durchdringt, wobei das Schmiermaterial in die Ummantelung während oder vor dem Extrudieren eingelagert wurde; und
**dass** der Mantel genügend Schmiermaterial (19) enthält, um einen reduzierten Reibkoeffizienten der Außenoberfläche des Außenmantels bereitzustellen, der ausreicht, um die erforderliche Kraft, um das Kabel (12) während seiner Installation durch die Durchgangswege zu ziehen, zu reduzieren.

2. Verwendung gemäß Anspruch 1, bei der das Einlagern des Schmiermaterials (19) in das Kunststoffmaterial (17) erfolgte und durch Kombination des Schmiermaterials (19) mit dem Kunststoffmaterial (17) in Nicht-Pellet-Form bewirkt wurde, um dadurch ausreichend geschmierte Materialpellets zu bilden, und die derart geschmierten Materialpellets danach für das Extrudieren verwendet wurden.

3. Verwendung gemäß Anspruch 1, bei der das Einlagern durch Einspritzen des Kunststoffmaterials (17) in einer nicht geschmierten Form in einen Extruderkopf (15) an einem Ort und Einspritzen des ausgewählten Schmiermaterials (19) in den Extruderkopf (15) an einem zweiten Ort stromabwärts von dem ersten Ort, während der Extrusion des Mantels durch den Extruderkopf bewirkt wurde.

4. Verwendung gemäß Anspruch 1, bei der das Einlagern durch Kombination des vorgewählten Schmiermaterials (19) mit Pellets des Kunststoffmaterials (17) und Extrudieren des Mantels unter Verwendung der derart geschmierten Materialpellets bewirkt wurde.

5. Verwendung gemäß einem der Ansprüche 1 bis 4, bei der die thermoplastische Isolierung des Kabelkerns (17) Polyvinylchlorid (PVC) ist.

6. Verwendung gemäß einem der Ansprüche 1 bis 5, bei der der Kabelkern (14) wenigstens einen elektrischen Leiter aufweist und wobei das thermoplastische Material (17) direkt auf den elektrischen Leiter extrudiert wurde.

7. Verwendung gemäß einem der vorhergehenden Ansprüche, bei der das elektrische Kabel ein THHN-Kabel ist.

8. Verwendung gemäß einem der vorhergehenden Ansprüche, bei der die Reduzierung der erforderlichen Kraft zur Installation wenigstens ungefähr 50% der Kraft beträgt, die erforderlich ist, um ein nicht geschmiertes Kabel desselben Kabeltyps zu installieren.

9. Verwendung gemäß einem der vorhergehenden Ansprüche, bei der die Installation durch das Innere einer Wand oder Decke erfolgt.

10. Verwendung gemäß einem der vorhergehenden Ansprüche, bei der die Installation durch eine Röhre erfolgt.

11. Verwendung gemäß einem der vorhergehenden Ansprüche, bei der die Installation durch einen Kanal erfolgt.

12. Verwendung gemäß einem der vorhergehenden Ansprüche, bei der das Schmiermaterial (19) Silikonöl aufweist.

## Revendications

1. Utilisation d'un câble électrique (12) ayant une âme de câble (14) et une gaine externe avec une surface extérieure définissant la surface la plus à l'extérieur du câble (12), dans laquelle la gaine externe du câble (12) est formée de matière plastique extrudée (17), **caractérisée en ce que** :
le câble électrique (12) est utilisé dans une installation à travers des cavités de mur ou de plafond, des conduits ou des canalisations ;
l'âme de câble (14) est constituée d'un conducteur électrique avec une isolation thermoplastique ;
la matière plastique (17) formant la gaine externe est une matière polyamide ;
la gaine incorpore une matière lubrifiante (19) qui progresse par efflorescence, migre vers la surface extérieure de l'enveloppe ou s'infiltre dans celle-ci, la matière lubrifiante étant incorporée dans l'enveloppe pendant ou avant l'extrusion ; et
la gaine contient de la matière lubrifiante (19) suffisante pour donner un coefficient de frottement réduit de la surface extérieure de ladite gaine externe suffisant pour réduire la quantité de force requise pour tirer le câble (12) à travers lesdites voies de passage pendant son installation.

2. Utilisation telle que définie par la revendication 1, dans laquelle l'introduction de ladite matière lubrifiante (19) s'effectue dans ladite matière plastique (17) et est réalisée en combinant ladite matière lubrifiante (19) avec ladite matière plastique (17) sous forme non granulée, pour ainsi former des granulés de matière suffisamment lubrifiée, et les granulés de matière ainsi lubrifiée sont ensuite utilisés pour ladite extrusion.

3. Utilisation telle que définie dans la revendication 1, dans laquelle ladite introduction est réalisée en injectant ladite matière plastique (17) sous forme non lubrifiée dans une tête d'extrusion (15) à un premier emplacement et en injectant ladite matière lubrifiante sélectionnée (19) dans ladite tête d'extrusion (15) à un second emplacement en aval dudit premier emplacement, tout en extrudant ladite gaine à travers ladite tête d'extrusion.

4. Utilisation telle que définie dans la revendication 1, dans laquelle ladite introduction est réalisée en combinant ladite matière lubrifiante présélectionnée (19) avec des granulés de ladite matière plastique (17), et en extrudant la gaine en utilisant les granulés de matière ainsi lubrifiée.

5. Utilisation telle que définie par l'une quelconque des revendications 1 à 4, dans laquelle l'isolation thermoplastique de l'âme de câble (17) est un polychlorure de vinyle (PVC).

6. Utilisation telle que définie par l'une quelconque des revendications 1 à 5, dans laquelle l'âme de câble (14) inclut au moins un conducteur électrique, et la matière thermoplastique (17) est extrudée directement sur un conducteur électrique.

7. Utilisation telle que définie par l'une quelconque des revendications précédentes, dans laquelle ledit câble électrique est un câble THHN.

8. Utilisation telle que définie par l'une quelconque des revendications précédentes, dans laquelle la réduction de la force requise pour l'installation est d'au moins approximativement 50 % de la force requise pour installer un câble non lubrifié du même type de câble.

9. Utilisation telle que définie dans l'une quelconque des revendications précédentes, dans laquelle l'installation s'effectue à travers la section interne d'un mur ou d'un plafond.

10. Utilisation telle que définie dans l'une quelconque des revendications précédentes, dans laquelle l'installation s'effectue à travers un conduit.

11. Utilisation telle que définie dans l'une quelconque des revendications précédentes, dans laquelle l'installation s'effectue à travers une canalisation.

12. Utilisation telle que définie dans l'une quelconque des revendications précédentes, dans laquelle ladite matière lubrifiante (19) est composée d'huile de silicone.
